# EUROPEAN PATENT APPLICATION

(11) **EP 4 024 348 A2**
(43) Date of publication of application: **06.07.2022**
(21) Application number: 22163054.4
(22) Date of filing: 18.03.2022
(51) Int. Cl.: G06V 20/56

(54) **METHOD AND DEVICE FOR DETERMINING BOUNDARY POINTS OF BOTTOM SURFACE OF VEHICLE, ROADSIDE DEVICE AND CLOUD CONTROL PLATFORM**

(30) Priority: 08.04.2021 CN 202110377781
(71) Applicant: Apollo Intelligent Connectivity (Beijing) Technology Co., Ltd., Beijing 100176 (CN)
(72) Inventor: LI, Huan, Beijing, 100176 (CN)
(74) Representative: Studio Torta S.p.A.

(57) **Abstract**

A method for determining one or more boundary points of a bottom surface of a vehicle includes: obtaining a road condition image collected by a roadside camera, and determining a target vehicle in the road condition image; determining a target vanishing point in the road condition image in accordance with an image feature in the road condition image or an image feature of the target vehicle; obtaining visible edge lines of the target vehicle in the road condition image and two wheels at a same side of the target vehicle, and determining a ground baseline in accordance with ground contact points of the two wheels; and determining one or more boundary points of a bottom surface of the target vehicle in accordance with the target vanishing point, the visible edge lines and the ground baseline.

## Description

### TECHNICAL FIELD

The present disclosure relates to the field of computer technology, in particular to a smart traffic technique, and more particularly to a method and a device for determining one or more boundary points of a bottom surface of a vehicle, a roadside device and a cloud control platform.

### BACKGROUND

In a computer vision-based three-dimensional (3D) vehicle detection task, usually a circumscribed rectangular envelop of a vehicle needs to be detected, and the rectangular envelop needs to be determined in accordance with four boundary points of a rectangle of a bottom surface of the vehicle and a height of the vehicle. Currently, a vehicle contour is detected by means of a radar and a multinocular camera so as to mark the boundary points of the vehicle, or the boundary points are marked directly from experience in a manual manner.

### SUMMARY

An object of the present disclosure is to provide a method and a device for determining one or more boundary points of a bottom surface of a vehicle, a roadside device and a cloud control platform, so as to completely or partially solve the problem in the related art.

In one aspect, the present disclosure provides in some embodiments a method for determining one or more boundary points of a bottom surface of a vehicle, including: obtaining a road condition image collected by a roadside camera, and determining a target vehicle in the road condition image; determining a target vanishing point in the road condition image in accordance with an image feature in the road condition image or an image feature of the target vehicle; obtaining visible edge lines of the target vehicle in the road condition image and two wheels at a same side of the target vehicle, and determining a ground baseline in accordance with ground contact points of the two wheels; and determining one or more boundary points of a bottom surface of the target vehicle in accordance with the target vanishing point, the visible edge lines and the ground baseline, the boundary point of the bottom surface being an orthogonal projection of a boundary point of the bottom surface of the target vehicle onto a ground surface.

In another aspect, the present disclosure provides in some embodiments a device for determining one or more boundary points of a bottom surface of a vehicle, including: a first obtaining module configured to obtain a road condition image collected by a roadside camera, and determine a target vehicle in the road condition image; a first determination module configured to determine a target vanishing point in the road condition image in accordance with an image feature in the road condition image or an image feature of the target vehicle; a second obtaining module configured to obtain visible edge lines of the target vehicle in the road condition image and two wheels at a same side of the target vehicle, and determine a ground baseline in accordance with ground contact points of the two wheels; and a second determination module configured to determine one or more boundary points of a bottom surface of the target vehicle in accordance with the target vanishing point, the visible edge lines and the ground baseline, the boundary point of the bottom surface being an orthogonal projection of a boundary point of the bottom surface of the target vehicle onto a ground surface.

In yet another aspect, the present disclosure provides in some embodiments an electronic device, including at a least one processor, and a memory in communication with the at least one processor and configured to store therein an instruction executed by the at least one processor. The at least one processor is configured to execute the instruction so as to implement the above-mentioned method.

In still yet another aspect, the present disclosure provides in some embodiments a non-transitory computer-readable storage medium storing therein a computer instruction. The computer instruction is executed by a computer so as to implement the above-mentioned method.

In still yet another aspect, the present disclosure provides in some embodiments a computer program product including a computer program. The computer program is executed by a processor so as to implement the above-mentioned method.

In still yet another aspect, the present disclosure provides in some embodiments a roadside device including the above-mentioned electronic device.

In still yet another aspect, the present disclosure provides in some embodiments a cloud control platform including the above-mentioned electronic device.

According to the embodiments of the present disclosure, merely the road condition image collected by the roadside camera needs to be obtained, and then the boundary point(s) of the bottom surface of the vehicle is(are) determined in accordance with a structural feature of the vehicle itself. As a result, it is able to solve such problems as incorrect positioning of an external device, a large data volume, and insufficient accuracy caused when the boundary point(s) is(are) determined from experience in a manual manner, thereby to determine the ground contact point(s) of the wheel accurately.

It should be understood that, this summary is not intended to identify key features or essential features of the embodiments of the present disclosure, nor is it intended to be used to limit the scope of the present disclosure. Other features of the present disclosure will become more comprehensible with reference to the following description.

### BRIEF DESCRIPTION OF THE DRAWINGS

The following drawings are provided to facilitate the understanding of the present disclosure, but shall not be construed as limiting the present disclosure. In these drawings,
FIG. 1 is a flow chart of a method for determining one or more boundary points of a bottom surface of a vehicle according to one embodiment of the present disclosure;
FIG. 2 is a schematic view showing the determination of a target vanishing point in the method according to one embodiment of the present disclosure;
FIG. 3 is another schematic view showing the determination of the target vanishing point in the method according to one embodiment of the present disclosure;
FIG. 4 is a structural view of a device for determining one or more boundary points of a bottom surface of a vehicle according to one embodiment of the present disclosure; and
FIG. 5 is a block diagram of an electronic device for implementing the method according to one embodiment of the present disclosure.

### DETAILED DESCRIPTION

In the following description, numerous details of the embodiments of the present disclosure, which should be deemed merely as exemplary, are set forth with reference to accompanying drawings to provide a thorough understanding of the embodiments of the present disclosure. Therefore, those skilled in the art will appreciate that modifications or replacements may be made in the described embodiments. Further, for clarity and conciseness, descriptions of known functions and structures are omitted. The present disclosure provides in some embodiments a method for determining one or more boundary points of a bottom surface of a vehicle.

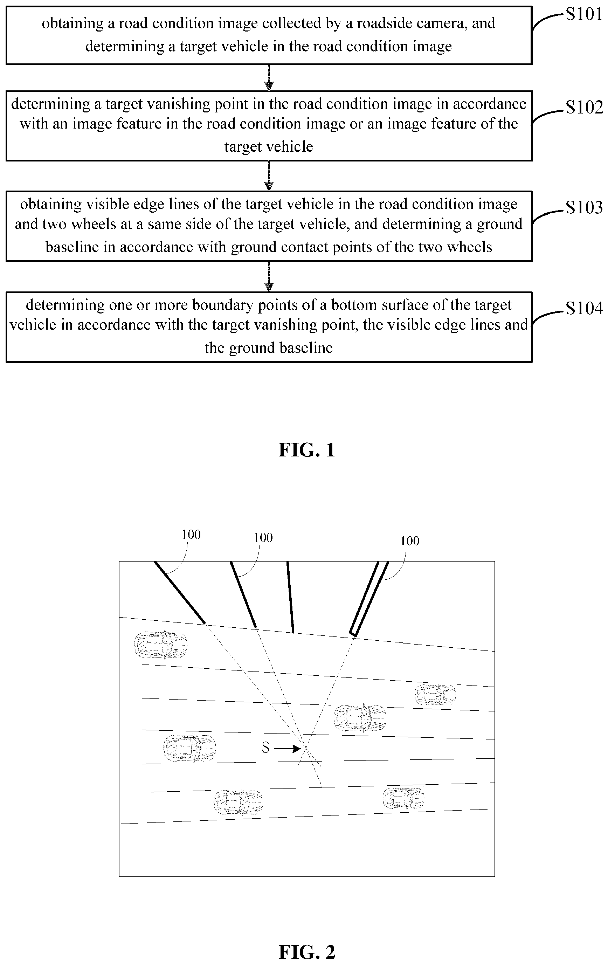

FIG. 1 is a flow chart of the method for determining the one or more boundary points of the bottom surface of the vehicle, which is implemented by a computer. As shown in FIG. 1, the method includes the following steps.

Step S101: obtaining a road condition image collected by a roadside camera, and determining a target vehicle in the road condition image.

It should be appreciated that, the roadside camera is a camera mounted at either side of a road, or a camera mounted at a position where a traffic lamp is mounted. The following description will be given when the camera is mounted at either side of the road. It should be further appreciated that, based on this, it is able for a person skilled in the art to obtain the method for determining the one or more boundary points of the bottom surface of the vehicle implemented by the camera at the position where the traffic lamp is mounted, which will not be particularly defined herein. To be specific, a photographing range of the roadside camera is a road surface, e.g., a road condition image captured by the camera from above or from one side of the road. In addition, usually the roadside camera is mounted at a level higher than a height of the vehicle. In the embodiments of the present disclosure, the road condition image includes at least one vehicle, and the target vehicle is one of the vehicles in the road condition image. Step S102: determining a target vanishing point in the road condition image in accordance with an image feature in the road condition image or an image feature of the target vehicle.

Here, the vanishing point refers to a visual intersection between two parallel lines in the road condition image. For example, the road condition image includes two telegraph poles perpendicular to a ground surface. To be specific, in a real scene corresponding to the road condition image, the two telegraph poles are substantially parallel to each other. However in the road condition image captured by the camera, the two telegraph pols are not substantially parallel to each other. Extension lines of the two telegraph poles intersect in the road condition image, and a resultant intersection is just the vanishing point of the real scene corresponding to the road condition image in a vertical direction.

It should be appreciated that, depending on different directions, there exists a plurality of vanishing points corresponding to the road condition image. For example, a real scene corresponding to the road condition image corresponds to one vanishing point in the vertical direction, corresponds to another vanishing point in a horizontal direction, and corresponds to yet another vanishing point in a direction angled relative to the ground surface by 45°. In the embodiments of the present disclosure, the target vanishing point is a vanishing point of a real scene corresponding to the road condition image in a direction substantially perpendicular to the ground surface.

It should be appreciated that, the target vanishing point is determined in accordance with the image feature in the road condition image, or in accordance with the image feature of the target vehicle. In a possible embodiment of the present disclosure, Step S102 includes: obtaining at least two target baselines substantially perpendicular to the ground surface in the road condition image, and determining an intersection between extension lines of the at least two target baselines as the target vanishing point; or obtaining at least two visible edge lines substantially perpendicular to the ground surface in the target vehicle, and determining an intersection between extension lines of the two visible edge lines as the target vanishing point.

In a possible embodiment of the present disclosure, the target vanishing point is determined in accordance with the image feature in the road condition image. It should be appreciated that, when the target vanishing point is a vanishing point of a real scene corresponding to the road condition image in the vertical direction, at least two target baselines substantially perpendicular to the ground surface in the road condition image are obtained. For example, the target baseline is a telegraph pole perpendicular to the ground surface, or an edge line of a roadside building perpendicular to the ground surface, or a handrail perpendicular to the ground surface. Then, the intersection between the extension lines of the at least two target baselines are obtained and determined as the target vanishing point.

As shown in FIG. 2, for example, three telegraph poles 100 substantially perpendicular to the ground surface in the road condition image are obtained, and an intersection S of extension lines of the three telegraph poles 100 are determined. Correspondingly, the intersection S is just the target vanishing point in the road condition image.

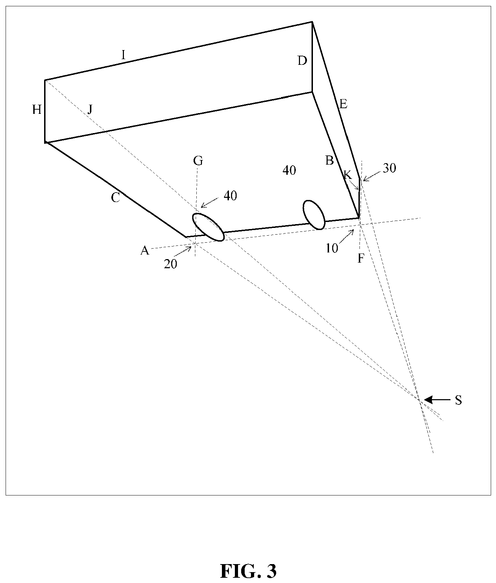

In another possible embodiment of the present disclosure, after the target vehicle in the road condition image has been determined, the target vanishing point is determined in accordance with the image feature of the target vehicle. For example, when the target vehicle is a rectangular bus, at least two visible edge lines of the bus substantially perpendicular to the ground surface are obtained, and an intersection between extension lines of the two visible edge lines is determined as the target vanishing point. As shown in FIG. 3, when the target vehicle is a rectangular bus, at least two visible edge lines of the bus substantially perpendicular to the ground surface are obtained, and an intersection between extension lines of the two visible edge lines is determined as the target vanishing point S.

It should be appreciated that, when an edge line of the target vehicle is not a regular straight line, an edge line of the target vehicle perpendicular to the ground surface is obtained through creating a model. For example, an edge line of the target vehicle perpendicular to the ground surface is created in accordance with a point on an edge of a minimum circumscribed cuboid of the target vehicle.

In the embodiments of the present disclosure, the target vanishing point of the real scene corresponding to the road condition image in the vertical direction is determined through any one of the above-mentioned ways. In a possible embodiment of the present disclosure, the target vanishing point is determined in accordance with the target baseline in the road condition image. When the road condition image does not include any target baseline substantially perpendicular to the ground surface, the target vanishing point is determined in accordance with the image feature of the target vehicle. In addition, when the target vehicle does not include any visible edge line perpendicular to the ground surface, the target vanishing point is determined in accordance with any other target baseline perpendicular to the ground surface, or through creating an edge line of the target vehicle perpendicular to the ground surface. In this way, it is able to determine the target vanishing point flexibly.

Step S 103: obtaining visible edge lines of the target vehicle in the road condition image and two wheels at a same side of the target vehicle, and determining a ground baseline in accordance with ground contact points of the two wheels.

The edge line refers to an intersection line between different sides of a vehicle. For example, in a traveling direction of the vehicle, an intersection line between a left side surface and a head side of the vehicle is an edge line, and an intersection line between a right side surface and the heat side is another edge line. In the embodiments of the present disclosure, the visible edge line refers to an edge line visible, i.e., not shielded, in the road condition image. FIG. 2 is a first schematic view showing the determination of the target vanishing point in the method. As shown in FIG. 2, three visible edge lines of the target vehicle in the direction perpendicular to the ground surface and a plurality of visible edge lines on a top surface of the target vehicle are capable of being obtained in the road condition image.

It should be appreciated that, in the road condition image collected by the roadside camera, two visible wheels at a same side of each vehicle, e.g., front and rear wheels at a left side or two front wheels at the head side, are obtained. In the embodiments of the present disclosure, two visible wheels at a same side of the target vehicle are obtained. Here, the roadside camera (not shown in FIG. 3) is arranged on the telegraph pole 100 at either side of a road at a position above the ground surface by a certain distance. FIG. 3 is second schematic view showing the determination of the target vanishing point in the method. Here, FIG. 3 is a solid view of a deformed target vehicle. It should be appreciated that, a deformation (distortion) degree depends on a deviation angle of the roadside camera relative to the target vehicle in a height direction substantially perpendicular to the ground surface and a road width direction substantially perpendicular to a roadside line. As shown in FIG. 3, a front wheel and a rear wheel at a left side of the target vehicle are obtained, and a line connecting ground contact points of the two wheels is determined as a ground baseline A (i.e., a line connecting the ground contact points of the two wheels on a road surface). In the scene corresponding to the road condition image, the ground baseline A is substantially perpendicular to the visible edge line of the target vehicle in the vertical direction.

It should be appreciated that, as viewed by the roadside camera, the visible edge line is not substantially perpendicular to the ground baseline in the road condition image. Step S104: determining one or more boundary points of a bottom surface of the target vehicle in accordance with the target vanishing point, the visible edge lines and the ground baseline.

Here, the boundary point of the bottom surface is an orthogonal projection of a boundary point of the bottom surface of the target vehicle onto the ground surface, e.g., an intersection between two adjacent side surfaces of the vehicle. For example, there are two intersections between a left side surface and the bottom surface of the vehicle, and these two intersections belong to both the left side surface of the vehicle and the bottom surface of the vehicle.

In a possible embodiment of the present disclosure, usually the bottom surface of the vehicle is of a rectangular shape or a shape similar to a rectangle. In the case that the bottom surface of the target vehicle is not of a rectangular shape, the boundary point(s) of the bottom surface of the target vehicle is(are) determined through creating a model. For example, a circumscribed rectangle of the target vehicle is created in accordance with outermost lines tangent to four side surfaces of the target vehicle, and then four vertices of the circumscribed rectangle are determined as the boundary points of the bottom surface of the target vehicle.

It should be appreciated that, the quantity of the boundary points of the bottom surface is determined in accordance with a shape of the bottom surface of the target vehicle. For example, there are four boundary points of the bottom surface of the target vehicle. Alternatively, in the case that the target vehicle has a polygonal bottom surface, e.g., a hexagonal bottom surface, there are six boundary points of the bottom surface. In order to describe the technical solution of the present disclosure in a better manner, the following description will be given when the bottom surface of the target vehicle is a rectangle and there are four boundary points of the bottom surface.

It should be appreciated that, the bottom surface of the target vehicle is arranged at a certain level relative to the ground surface. In the embodiments of the present disclosure, the boundary point of the bottom surface is an orthogonal projection of the boundary point of the bottom surface of the target vehicle onto the ground surface. The visible edge line refers to an edge line in visible edge line of the target vehicle perpendicular to the ground surface. Two boundary points of the bottom surface are determined in accordance with the intersection between the visible edge line and the ground baseline. Next, the other two boundary points of the bottom surface of the target vehicle are determined in accordance with the two determined boundary points of the bottom surface, the target vanishing point, the extension line of the other visible edge line of the target vehicle and the extension line of the edge line at the other side surface of the target vehicle.

It should be appreciated that, the boundary point(s) of the bottom surface is(are) marked in the road condition image, or a coordinate system is created for the road condition image. For example, a coordinate system is created with the vanishing point or a lower left corner of the road condition image as an origin, and the boundary point of the bottom surface of the target vehicle is represented by coordinate values.

According to the embodiments of the present disclosure, the visible edge line of the target vehicle, the target vanishing point in the road condition image and the ground baseline are determined, and then the boundary point(s) of the bottom surface of the target vehicle is(are) determined in accordance with the target vanishing point, the visible edge line, the ground baseline and the extension line of the edge line at the other side surface of the target vehicle. Through determining the one or more boundary points of the bottom surface, it is able to determine a circumscribed rectangular envelop of the target vehicle, thereby to finish a 3D detection task of the target vehicle. As compared with the related art where 3D information about a vehicle is indirectly obtained through an external device such as a radar or a multinocular camera or information about the boundary point(s) of the vehicle is(are) determined from experience in a manual manner, in the embodiments of the present disclosure, merely the road condition image collected by the roadside camera needs to be obtained, and then the boundary point(s) of the bottom surface of the vehicle is(are) determined in accordance with a structural feature of the vehicle itself. As a result, it is able to solve such problems as incorrect positioning of the external device, a large data volume, and insufficient accuracy caused when the boundary point(s) is(are) determined from experience in a manual manner, thereby to determine the ground contact point(s) of the wheel accurately.

In a possible embodiment of the present disclosure, Step S104 includes: obtaining a first visible side surface of the target vehicle, and a first visible edge line and a second visible edge line of the first visible side surface perpendicular to the ground surface, the first visible side surface being a side surface of the target vehicle where the two wheels are located; determining an intersection between an extension line of the first visible edge line and an extension line of the ground baseline as a first boundary point of the bottom surface, and determining an intersection between an extension line of the second visible edge line and the extension line of the ground baseline as a second boundary point of the bottom surface; and obtaining a vehicle-top edge line of the target vehicle, and determining a third boundary point and a fourth boundary point of the bottom surface of the target vehicle in accordance with the vehicle-top edge line, the first boundary point of the bottom surface, the second boundary point of the bottom surface and the target vanishing point.

The first visible side surface is a plane where two wheels at a same side of the target vehicle are located, as shown in FIG. 3. It should be appreciated that, two edge lines of the first visible side surface perpendicular to the ground surface are visible edge lines, e.g., a first visible edge line B and a second visible edge line C. The first boundary point 10 and the second boundary point 20 of the bottom surface are determined in accordance with intersections between an extension line of each edge line and the ground baseline A. At this time, it is necessary to determine the other two boundary points of the bottom surface of the target vehicle. At least one of these two boundary points is invisible in the road condition image, and it is determined in accordance with the other edge lines of the target vehicle.

It should be appreciated that, usually the roadside camera is arranged above the vehicle. Hence, the vehicle-top edge line of the target vehicle is obtained, and then the other two boundary points of the bottom surface of the target vehicle are determined in accordance with the edge line of the top surface, the two determined boundary points of the bottom surface and the target vanishing point.

For example, when there are two visible edge lines of the target vehicle in the road condition image, the visible side surfaces of the target vehicle include the first visible side surface and the top surface, and a side surface opposite to the first visible side surface is shielded by the first visible side surface. In this case, this side surface is determined in accordance with the top surface and the visible edge lines of the target vehicle. Presumed that edges lines of the first visible side surface perpendicular to the ground surface are a first edge line and a second edge line, a first boundary point and a second boundary point of the top surface of the target vehicle away from the first visible side surface are obtained. Then, the third boundary point of the bottom surface is determined in accordance with a length of the first edge line and the first boundary point of the top surface, and the fourth boundary point of the bottom surface is determined in accordance with a length of the second edge line and the second boundary point of the top surface. To be specific, a distance between the first boundary point of the top surface and the third boundary point of the bottom surface is equal to the length of the first edge line, and a distance between the second boundary point of the top surface and the fourth boundary point of the bottom surface is equal to the length of the second edge line. Alternatively, as shown in FIG. 3, when there are three visible edge lines of the target vehicle in the road condition image, the visible side surfaces of the target vehicle include the first visible side surface, the second visible side surface and the top surface. At this time, the third boundary point and the fourth boundary point of the bottom surface are determined in accordance with the edge line of the top surface, the edge line of the second visible side surface, the target vanishing point and the two determined boundary points of the bottom surface.

In this way, depending on different conditions of the target vehicle in the road condition image, it is able to determine the boundary point of the bottom surface of the target vehicle flexibly in accordance with the image features about the target vehicle, e.g., the visible edge lines, the visible side surfaces and the target vanishing point, thereby to determine the boundary point of the bottom surface in the road condition image accurately, and finish the 3D detection task of the target vehicle.

In a possible embodiment of the present disclosure, in the case that the visible side surfaces of the target vehicle in the road condition image include the first visible side surface, the second visible side surface and the top surface, the obtaining the vehicle-top edge line of the target vehicle and determining the third boundary point and the fourth boundary point of the bottom surface of the target vehicle in accordance with the vehicle-top edge line, the first boundary point of the bottom surface and the second boundary point of the bottom surface includes: obtaining the second visible side surface adjacent to the first visible side surface, and obtaining a first vehicle-top edge line between the second visible side surface and the top surface, the first vehicle-top edge line being an edge line where the first boundary point of the bottom surface is located; obtaining a third visible edge line opposite to the first visible edge line and a first vehicle-bottom edge line opposite to the first vehicle-top edge line in the second visible side surface; determining a first edge line of the bottom surface substantially parallel to the first vehicle-bottom edge line in accordance with the first boundary point of the bottom surface, the first edge line of the bottom surface including the first boundary point of the bottom surface; determining the third boundary point of the bottom surface in accordance with an intersection between an extension line of the third visible edge line and an extension line of the first edge line of the bottom surface; and determining the fourth boundary point of the bottom surface in accordance with the second visible side surface, the second boundary point of the bottom surface and the target vanishing point.

It should be appreciated that, depending on the arrangement of the roadside camera, the road condition image collected by the roadside camera includes the top surface of the target vehicle, so the first vehicle-top edge line of the target vehicle adjacent to the first boundary point of the bottom surface is capable of being obtained. The first vehicle-top edge line is an edge line in a vehicle-top width direction of the target vehicle, e.g., the first vehicle-top edge line D of the target vehicle as shown in FIG. 3.

Referring to FIG. 3 again, the second visible side surface of the target vehicle adjacent to the first visible side surface is obtained, and one visible edge line is formed by intersecting the second visible side surface and the first visible side surface. In addition, this visible edge line passes through the first boundary point of the bottom surface, and it is defined as the first visible edge line B. It should be appreciated that, the first vehicle-top edge line D is also an edge line of the second visible side surface. A third visible edge line E opposite to the first visible edge line B in the second visible side surface is obtained, and the edge lines B and E are edge lines of the second visible side surface in a height direction of the target vehicle. A first vehicle-bottom edge line K opposite to the first vehicle-top edge line D is obtained in the second visible side surface, and the first vehicle-bottom edge line K intersects the first visible edge line B and the third visible edge line E. Further, a first edge line F of the bottom surface substantially parallel to the first vehicle-bottom edge line K is determined in accordance with the first boundary point 10 of the bottom surface. The first edge line F of the bottom surface passes through the first boundary point 10 of the bottom surface, so the first edge line F of the bottom surface and the ground surface are coplanar. At this time, an intersection between an extension line of the first visible edge line E and an extension line of the first edge line F of the bottom surface is just the third boundary point 30 of the bottom surface of the target vehicle.

In the embodiments of the present disclosure, the bottom surface of the target vehicle is of a rectangular shape. After three boundary points of the bottom surface of the target vehicle have been determined, it is able to determine the remaining boundary point of the bottom surface in accordance with the three determined boundary points, the visible edge lines of the visible side surfaces and the target vanishing point.

It should be appreciated that, when the second boundary point and the fourth boundary point of the bottom surface are located on a same straight line substantially parallel to a straight line where the third boundary point and the first boundary point of the bottom surface are located, the fourth boundary point of the bottom surface is determined in accordance with the second visible side surface, the second boundary point of the bottom surface and the target vanishing point. In this way, it is able to determine the four boundary points of the bottom surface in accordance with the determined boundary points of the bottom surface and the visible edge lines, rather than through such an external device as radar or on the basis of personal experience, thereby to determine the boundary points of the bottom surface of the vehicle accurately.

In a possible embodiment of the present disclosure, the determining the fourth boundary point of the bottom surface in accordance with the second visible side surface, the second boundary point of the bottom surface and the target vanishing point includes: obtaining a second edge line of the bottom surface of the target vehicle, the second edge line of the bottom surface being substantially parallel to the first edge line of the bottom surface, the second boundary point of the bottom surface being located on the second edge line of the bottom surface; obtaining a second vehicle-top edge line opposite to the second edge line of the bottom surface in the top surface of the target vehicle, and obtaining a target intersection between the second vehicle-top edge line and a third vehicle-top edge line, the third vehicle-top edge line being an edge line in a length direction of the target vehicle and opposite to the first visible side surface; and obtaining a line connecting the target intersection and the target vanishing point, and determining an intersection between the line and the second edge line of the bottom surface as the fourth boundary point of the bottom surface.

It should be appreciated that, the second boundary point and the fourth boundary point of the bottom surface are located on a same straight line substantially parallel to a straight line where the third boundary point and the first boundary point of the bottom surface are located. The first edge line of the bottom surface is determined in accordance with the first boundary point and the third boundary point of the bottom surface, and then the second edge line of the bottom surface substantially parallel to the first edge line of the bottom surface is obtained. At this time, the second boundary point and the fourth boundary point of the bottom surface are located on the second edge line of the bottom surface. The second boundary point of the bottom surface has already been determined, so it is necessary to determine the fourth boundary point in accordance with the second edge line of the bottom surface.

As shown in FIG. 3, a second vehicle-top edge line H substantially parallel to the first vehicle-top edge line D and a third vehicle-top edge line I intersecting the second vehicle-top edge line H are obtained in the top surface of the target vehicle, and the third vehicle-top edge line I is an edge line away from the first visible side surface. Then, a target intersection between the second vehicle-top edge line H and the third vehicle-top edge line I is obtained. It should be appreciated that, a line connecting the target intersection and the fourth boundary point of the bottom surface is an invisible edge line of the target vehicle perpendicular to the ground surface. The target vanishing point S is located on a straight line substantially perpendicular to the ground surface in the road condition image, so a line where the invisible edge line is located passes through the target vanishing point S. Then, a line J connecting the target vanishing point S and the target intersection is obtained, the invisible edge line coincides with the line J, and the fourth boundary point of the bottom surface is located on the line J. In addition, the fourth boundary point of the bottom surface is also located on the second edge line G of the bottom surface, so an intersection between the second edge line G of the bottom surface and the line J is determined as the fourth boundary point 40 of the bottom surface. In this way, it is able to determine the four boundary points of the bottom surface of the target vehicle accurately.

It should be appreciated that, the fourth boundary point of the bottom surface may also be determined in any other suitable ways. For example, after the second edge line of the bottom surface has been determined, a third edge line of the bottom surface substantially parallel to the third vehicle-top edge line is obtained, the third edge line of the bottom surface passes through the third boundary point of the bottom surface, and then an intersection between the third edge line of the bottom surface and the second edge line of the bottom surface is just the fourth boundary point of the bottom surface. According to the embodiments of the present disclosure, the target vanishing point is determined in accordance with the road condition image collected by the roadside camera from above, and then the boundary point(s) of the bottom surface of the vehicle is(are) determined in accordance with the feature about the edge line of the vehicle in the road condition image. As a result, it is able to determine the boundary point(s) of the bottom surface of the vehicle accurately without any additional hardware, thereby to effectively reduce the hardware cost.

The present disclosure further provides in some embodiments a device for determining one or more boundary points of a bottom surface of a vehicle.

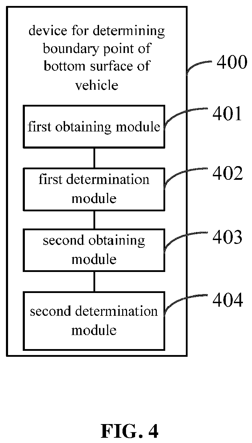

FIG. 4 is a structural view of the device 400 for determining the one or more boundary points of the bottom surface of the vehicle, and the device 400 is implemented by a computer. As shown in FIG. 4, the device 400 includes: a first obtaining module 401 configured to obtain a road condition image collected by a roadside camera, and determine a target vehicle in the road condition image; a first determination module 402 configured to determine a target vanishing point in the road condition image in accordance with an image feature in the road condition image or an image feature of the target vehicle; a second obtaining module 403 configured to obtain visible edge lines of the target vehicle in the road condition image and two wheels at a same side of the target vehicle, and determine a ground baseline in accordance with ground contact points of the two wheels; and a second determination module 404 configured to determine one or more boundary points of a bottom surface of the target vehicle in accordance with the target vanishing point, the visible edge lines and the ground baseline, the boundary point of the bottom surface being an orthogonal projection of a boundary point of the bottom surface of the target vehicle onto a ground surface.

In a possible embodiment of the present disclosure, the second determination module 404 is further configured to: obtain a first visible side surface of the target vehicle, and a first visible edge line and a second visible edge line of the first visible side surface perpendicular to the ground surface, the first visible side surface being a side surface of the target vehicle where the two wheels are located; determine an intersection between an extension line of the first visible edge line and an extension line of the ground baseline as a first boundary point of the bottom surface, and determine an intersection between an extension line of the second visible edge line and the extension line of the ground baseline as a second boundary point of the bottom surface; and obtain a vehicle-top edge line of the target vehicle, and determine a third boundary point and a fourth boundary point of the bottom surface of the target vehicle in accordance with the vehicle-top edge line, the first boundary point of the bottom surface, the second boundary point of the bottom surface and the target vanishing point.

In a possible embodiment of the present disclosure, the second determination module 404 is further configured to: obtain a second visible side surface adjacent to the first visible side surface, and obtain a first vehicle-top edge line between the second visible side surface and a top surface, the first vehicle-top edge line being an edge line where the first boundary point of the bottom surface is located; obtain a third visible edge line opposite to the first visible edge line and a first vehicle-bottom edge line opposite to the first vehicle-top edge line in the second visible side surface; determine a first edge line of the bottom surface substantially parallel to the first vehicle-bottom edge line in accordance with the first boundary point of the bottom surface, the first edge line of the bottom surface including the first boundary point of the bottom surface; determine the third boundary point of the bottom surface in accordance with an intersection between an extension line of the third visible edge line and an extension line of the first edge line of the bottom surface; and determine the fourth boundary point of the bottom surface in accordance with the second visible side surface, the second boundary point of the bottom surface and the target vanishing point.

In a possible embodiment of the present disclosure, the second determination module 404 is further configured to: obtain a second edge line of the bottom surface of the target vehicle, the second edge line of the bottom surface being substantially parallel to the first edge line of the bottom surface, the second boundary point of the bottom surface being located on the second edge line of the bottom surface; obtain a second vehicle-top edge line opposite to the second edge line of the bottom surface in the top surface of the target vehicle, and obtain a target intersection between the second vehicle-top edge line and a third vehicle-top edge line, the third vehicle-top edge line being an edge line in a length direction of the target vehicle and opposite to the first visible side surface; and obtain a line connecting the target intersection and the target vanishing point, and determine an intersection between the line and the second edge line of the bottom surface as the fourth boundary point of the bottom surface.

In a possible embodiment of the present disclosure, the first determination module 402 is further configured to: obtain at least two target baselines substantially perpendicular to the ground surface in the road condition image, and determine an intersection between extension lines of the at least two target baselines as the target vanishing point; or obtain at least two visible edge lines substantially perpendicular to the ground surface in the target vehicle, and determine an intersection between extension lines of the two visible edge lines as the target vanishing point.

It should be appreciated that, the device 400 in the embodiments of the present disclosure is capable of implementing the above-mentioned method with a same technical effect, and thus will not be particularly defined herein.

The present disclosure further provides in some embodiments an electronic device, a computer-readable storage medium and a computer program product.

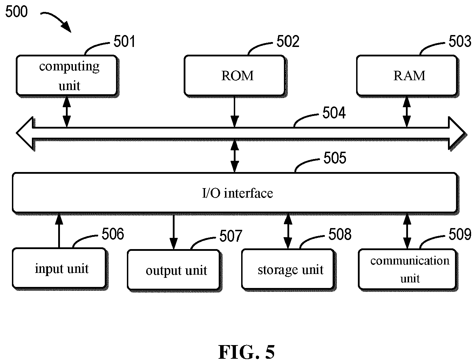

FIG. 5 is a schematic block diagram of the exemplary electronic device 400 in which embodiments of the present disclosure may be implemented. The electronic device is intended to represent all kinds of digital computers, such as a laptop computer, a desktop computer, a work station, a personal digital assistant, a server, a blade server, a main frame or other suitable computers. The electronic device may also represent all kinds of mobile devices, such as a personal digital assistant, a cell phone, a smart phone, a wearable device and other similar computing devices. The components shown here, their connections and relationships, and their functions, are meant to be exemplary only, and are not meant to limit implementations of the present disclosure described and/or claimed herein.

As shown in FIG. 5, the electronic device 500 includes a computing unit 501 configured to execute various processings in accordance with computer programs stored in a Read Only Memory (ROM) 502 or computer programs loaded into a Random Access Memory 503 via a storage unit 508. Various programs and data desired for the operation of the electronic device 500 may also be stored in the RAM 503. The computing unit 501, the ROM 502 and the RAM 503 may be connected to each other via a bus 504. In addition, an input/output (I/O) interface 505 may also be connected to the bus 504. Multiple components in the electronic device 500 are connected to the I/O interface 505. The multiple components include: an input unit 506, e.g., a keyboard, a mouse and the like; an output unit 507, e.g., a variety of displays, loudspeakers, and the like; a storage unit 508, e.g., a magnetic disk, an optic disk and the like; and a communication unit 509, e.g., a network card, a modem, a wireless transceiver, and the like. The communication unit 509 allows the electronic device 500 to exchange information/data with other devices through a computer network and/or other telecommunication networks, such as the Internet.

The computing unit 501 may be any general purpose and/or special purpose processing components having a processing and computing capability. Some examples of the computing unit 501 include, but are not limited to: a central processing unit (CPU), a graphic processing unit (GPU), various special purpose artificial intelligence (AI) computing chips, various computing units running a machine learning model algorithm, a digital signal processor (DSP), and any suitable processor, controller, microcontroller, etc. The computing unit 501 carries out the aforementioned methods and processes, e.g., the text recognition method. For example, in some embodiments of the present disclosure, the text recognition method may be implemented as a computer software program tangibly embodied in a machine readable medium such as the storage unit 508. In some embodiments of the present disclosure, all or a part of the computer program may be loaded and/or installed on the electronic device 500 through the ROM 502 and/or the communication unit 509. When the computer program is loaded into the RAM 503 and executed by the computing unit 501, one or more steps of the foregoing text recognition method may be implemented. Optionally, in some other embodiments of the present disclosure, the computing unit 501 may be configured in any other suitable manner (e.g., by means of firmware) to implement the text recognition method. Various implementations of the aforementioned systems and techniques may be implemented in a digital electronic circuit system, an integrated circuit system, a field-programmable gate array (FPGA), an application specific integrated circuit (ASIC), an application specific standard product (ASSP), a system on a chip (SOC), a complex programmable logic device (CPLD), computer hardware, firmware, software, and/or a combination thereof. The various implementations may include an implementation in form of one or more computer programs. The one or more computer programs may be executed and/or interpreted on a programmable system including at least one programmable processor. The programmable processor may be a special purpose or general purpose programmable processor, may receive data and instructions from a storage system, at least one input device and at least one output device, and may transmit data and instructions to the storage system, the at least one input device and the at least one output device.

Program codes for implementing the methods of the present disclosure may be written in one programming language or any combination of multiple programming languages. These program codes may be provided to a processor or controller of a general purpose computer, a special purpose computer, or other programmable data processing device, such that the functions/operations specified in the flow diagram and/or block diagram are implemented when the program codes are executed by the processor or controller. The program codes may be run entirely on a machine, run partially on the machine, run partially on the machine and partially on a remote machine as a standalone software package, or run entirely on the remote machine or server.

In the context of the present disclosure, the machine readable medium may be a tangible medium, and may include or store a program used by an instruction execution system, device or apparatus, or a program used in conjunction with the instruction execution system, device or apparatus. The machine readable medium may be a machine readable signal medium or a machine readable storage medium. The machine readable medium includes, but is not limited to: an electronic, magnetic, optical, electromagnetic, infrared, or semiconductor system, device or apparatus, or any suitable combination thereof. A more specific example of the machine readable storage medium includes: an electrical connection based on one or more wires, a portable computer disk, a hard disk, a random access memory (RAM), a read only memory (ROM), an erasable programmable read only memory (EPROM or flash memory), an optic fiber, a portable compact disc read only memory (CD-ROM), an optical storage device, a magnetic storage device, or any suitable combination thereof.

To facilitate user interaction, the system and technique described herein may be implemented on a computer. The computer is provided with a display device (for example, a cathode ray tube (CRT) or liquid crystal display (LCD) monitor) for displaying information to a user, a keyboard and a pointing device (for example, a mouse or a track ball). The user may provide an input to the computer through the keyboard and the pointing device. Other kinds of devices may be provided for user interaction, for example, a feedback provided to the user may be any manner of sensory feedback (e.g., visual feedback, auditory feedback, or tactile feedback); and input from the user may be received by any means (including sound input, voice input, or tactile input).

The system and technique described herein may be implemented in a computing system that includes a back-end component (e.g., as a data server), or that includes a middleware component (e.g., an application server), or that includes a front-end component (e.g., a client computer having a graphical user interface or a Web browser through which a user can interact with an implementation of the system and technique), or any combination of such back-end, middleware, or front-end components. The components of the system can be interconnected by any form or medium of digital data communication (e.g., a communication network). Examples of communication networks include a local area network (LAN), a wide area network (WAN) and the Internet.

The computer system can include a client and a server. The client and server are generally remote from each other and typically interact through a communication network. The relationship of client and server arises by virtue of computer programs running on respective computers and having a client-server relationship to each other. The present disclosure further provides in some embodiments a roadside device including the above-mentioned electronic device. The roadside device includes all the technical features of the electronic device with a same or similar technical effect, and thus will not be particularly defined herein.

In a possible embodiment of the present disclosure, apart from the electronic device, the roadside device further includes a communication member. The electronic device and the communication member are integrated or arranged separately. The electronic device is configured to obtain data, e.g., pictures and videos, from a sensing device (e.g., a roadside camera), so as to perform image/video processing and data computing. In a possible embodiment of the present disclosure, the electronic device itself is provided with a data obtaining function and a communicating function, e.g., an Artificial Intelligence (AI) camera, and it performs the image/video processing and data computing directly in accordance with the obtained data.

The present disclosure further provides in some embodiments a cloud control platform including the above-mentioned electronic device. The cloud control platform includes all technical features of the electronic device with a same or similar technical effect, and thus will not be particularly defined herein.

In a possible embodiment of the present disclosure, the cloud control platform is configured to perform the processing in the cloud. The electronic device of the cloud control platform is configured to obtain data, e.g., pictures and videos, from a sensing device (e.g., a roadside camera), so as to perform image/video processing and data computing. The cloud control platform is also called as a cooperative vehicle infrastructure system, an edge computing platform, a cloud computing platform, a central system, a cloud server, etc.

It should be appreciated that, all forms of processes shown above may be used, and steps thereof may be reordered, added or deleted. For example, as long as expected results of the technical solutions of the present disclosure can be achieved, steps set forth in the present disclosure may be performed in parallel, performed sequentially, or performed in a different order, and there is no limitation in this regard.

The above embodiments are for illustrative purposes only, but the present disclosure is not limited thereto. Obviously, a person skilled in the art may make further modifications and improvements.

## Claims

1. A method for determining one or more boundary points of a bottom surface of a vehicle implemented by a computer, comprising:
obtaining a road condition image collected by a roadside camera, and determining a target vehicle in the road condition image;
determining a target vanishing point in the road condition image in accordance with an image feature in the road condition image or an image feature of the target vehicle;
obtaining visible edge lines of the target vehicle in the road condition image and two wheels at a same side of the target vehicle, and determining a ground baseline in accordance with ground contact points of the two wheels; and
determining one or more boundary points of a bottom surface of the target vehicle in accordance with the target vanishing point, the visible edge lines and the ground baseline, the boundary point of the bottom surface being an orthogonal projection of a boundary point of the bottom surface of the target vehicle onto a ground surface.

2. The method according to claim 1, wherein the determining the one or more boundary points of the bottom surface of the target vehicle in accordance with the target vanishing point, the visible edge line and the ground baseline comprises:
obtaining a first visible side surface of the target vehicle, and a first visible edge line and a second visible edge line of the first visible side surface perpendicular to the ground surface, the first visible side surface being a side surface of the target vehicle where the two wheels are located;
determining an intersection between an extension line of the first visible edge line and an extension line of the ground baseline as a first boundary point of the bottom surface, and determining an intersection between an extension line of the second visible edge line and the extension line of the ground baseline as a second boundary point of the bottom surface; and
obtaining a vehicle-top edge line of the target vehicle, and determining a third boundary point and a fourth boundary point of the bottom surface of the target vehicle in accordance with the vehicle-top edge line, the first boundary point of the bottom surface, the second boundary point of the bottom surface and the target vanishing point.

3. The method according to claim 2, wherein the obtaining the vehicle-top edge line of the target vehicle and determining the third boundary point and the fourth boundary point of the bottom surface of the target vehicle in accordance with the vehicle-top edge line, the first boundary point of the bottom surface, and the second boundary point of the bottom surface comprises:
obtaining a second visible side surface adjacent to the first visible side surface, and obtaining a first vehicle-top edge line intersected by the second visible side surface and a top surface, the first vehicle-top edge line being an edge line where the first boundary point of the bottom surface is located;
obtaining a third visible edge line opposite to the first visible edge line and a first vehicle-bottom edge line opposite to the first vehicle-top edge line in the second visible side surface;
determining a first edge line of the bottom surface substantially parallel to the first vehicle-bottom edge line in accordance with the first boundary point of the bottom surface, the first edge line of the bottom surface comprising the first boundary point of the bottom surface;
determining the third boundary point of the bottom surface in accordance with an intersection between an extension line of the third visible edge line and an extension line of the first edge line of the bottom surface; and
determining the fourth boundary point of the bottom surface in accordance with the second visible side surface, the second boundary point of the bottom surface and the target vanishing point.

4. The method according to claim 3, wherein the determining the fourth boundary point of the bottom surface in accordance with the second visible side surface, the second boundary point of the bottom surface and the target vanishing point comprises:
obtaining a second edge line of the bottom surface of the target vehicle, the second edge line of the bottom surface being substantially parallel to the first edge line of the bottom surface, the second boundary point of the bottom surface being located on the second edge line of the bottom surface;
obtaining a second vehicle-top edge line opposite to the second edge line of the bottom surface in the top surface of the target vehicle, and obtaining a target intersection between the second vehicle-top edge line and a third vehicle-top edge line, the third vehicle-top edge line being an edge line in a length direction of the target vehicle and opposite to the first visible side surface; and
obtaining a line connecting the target intersection and the target vanishing point, and determining an intersection between the line and the second edge line of the bottom surface as the fourth boundary point of the bottom surface.

5. The method according to any one of claims 1-4, wherein the determining the target vanishing point in accordance with the image feature in the road condition image or the image feature of the target vehicle comprises:
obtaining at least two target baselines substantially perpendicular to the ground surface in the road condition image, and determining an intersection between extension lines of the at least two target baselines as the target vanishing point; or
obtaining at least two visible edge lines substantially perpendicular to the ground surface in the target vehicle, and determining an intersection between extension lines of the two visible edge lines as the target vanishing point.

6. The method according to any one of claims 1-5, wherein the target vanishing point is a visual intersection between two parallel lines in the road condition image, the visible edge line is an edge line not shielded and visible in the road condition image, and the ground baseline is a line connecting ground contact points of the two wheels on the ground surface where the target vehicle is located.

7. An electronic device, comprising at least one processor, and a memory in communication with the at least one processor and storing therein an instruction executed by the at least one processor, wherein the instruction is executed by the at least one processor so as to a method for determining one or more boundary points of a bottom surface of a vehicle, the method comprising:
obtaining a road condition image collected by a roadside camera, and determining a target vehicle in the road condition image;
determining a target vanishing point in the road condition image in accordance with an image feature in the road condition image or an image feature of the target vehicle;
obtaining visible edge lines of the target vehicle in the road condition image and two wheels at a same side of the target vehicle, and determining a ground baseline in accordance with ground contact points of the two wheels; and
determining one or more boundary points of a bottom surface of the target vehicle in accordance with the target vanishing point, the visible edge lines and the ground baseline, the boundary point of the bottom surface being an orthogonal projection of a boundary point of the bottom surface of the target vehicle onto a ground surface.

8. The electronic device according to claim 7, wherein the determining the one or more boundary points of the bottom surface of the target vehicle in accordance with the target vanishing point, the visible edge line and the ground baseline comprises:
obtaining a first visible side surface of the target vehicle, and a first visible edge line and a second visible edge line of the first visible side surface perpendicular to the ground surface, the first visible side surface being a side surface of the target vehicle where the two wheels are located;
determining an intersection between an extension line of the first visible edge line and an extension line of the ground baseline as a first boundary point of the bottom surface, and determining an intersection between an extension line of the second visible edge line and the extension line of the ground baseline as a second boundary point of the bottom surface; and
obtaining a vehicle-top edge line of the target vehicle, and determining a third boundary point and a fourth boundary point of the bottom surface of the target vehicle in accordance with the vehicle-top edge line, the first boundary point of the bottom surface, the second boundary point of the bottom surface and the target vanishing point.

9. The electronic device according to claim 8, wherein the obtaining the vehicle-top edge line of the target vehicle and determining the third boundary point and the fourth boundary point of the bottom surface of the target vehicle in accordance with the vehicle-top edge line, the first boundary point of the bottom surface, and the second boundary point of the bottom surface comprises:
obtaining a second visible side surface adjacent to the first visible side surface, and obtaining a first vehicle-top edge line intersected by the second visible side surface and a top surface, the first vehicle-top edge line being an edge line where the first boundary point of the bottom surface is located;
obtaining a third visible edge line opposite to the first visible edge line and a first vehicle-bottom edge line opposite to the first vehicle-top edge line in the second visible side surface;
determining a first edge line of the bottom surface substantially parallel to the first vehicle-bottom edge line in accordance with the first boundary point of the bottom surface, the first edge line of the bottom surface comprising the first boundary point of the bottom surface;
determining the third boundary point of the bottom surface in accordance with an intersection between an extension line of the third visible edge line and an extension line of the first edge line of the bottom surface; and
determining the fourth boundary point of the bottom surface in accordance with the second visible side surface, the second boundary point of the bottom surface and the target vanishing point.

10. The electronic device according to claim 9, wherein the determining the fourth boundary point of the bottom surface in accordance with the second visible side surface, the second boundary point of the bottom surface and the target vanishing point comprises:
obtaining a second edge line of the bottom surface of the target vehicle, the second edge line of the bottom surface being substantially parallel to the first edge line of the bottom surface, the second boundary point of the bottom surface being located on the second edge line of the bottom surface;
obtaining a second vehicle-top edge line opposite to the second edge line of the bottom surface in the top surface of the target vehicle, and obtaining a target intersection between the second vehicle-top edge line and a third vehicle-top edge line, the third vehicle-top edge line being an edge line in a length direction of the target vehicle and opposite to the first visible side surface; and
obtaining a line connecting the target intersection and the target vanishing point, and determining an intersection between the line and the second edge line of the bottom surface as the fourth boundary point of the bottom surface.

11. The electronic device according to any one of claims 7-10, wherein the determining the target vanishing point in accordance with the image feature in the road condition image or the image feature of the target vehicle comprises:
obtaining at least two target baselines substantially perpendicular to the ground surface in the road condition image, and determining an intersection between extension lines of the at least two target baselines as the target vanishing point; or
obtaining at least two visible edge lines substantially perpendicular to the ground surface in the target vehicle, and determining an intersection between extension lines of the two visible edge lines as the target vanishing point.

12. The electronic device according to any one of claims 7-11, wherein the target vanishing point is a visual intersection between two parallel lines in the road condition image, the visible edge line is an edge line not shielded and visible in the road condition image, and the ground baseline is a line connecting ground contact points of the two wheels on the ground surface where the target vehicle is located.

13. A computer-readable storage medium storing therein a computer instruction, wherein the computer instruction is executed by a computer so as to implement a method for determining one or more boundary points of a bottom surface of a vehicle according to any one of claims 1-6.

14. A roadside device comprising the electronic device according to any one of claims 7-12.

15. A cloud control platform comprising the electronic device according to any one of claims 7-12.
